# EUROPEAN PATENT APPLICATION

(11) **EP 2 413 418 A1**
(43) Date of publication of application: **01.02.2012**
(21) Application number: 10756184.7
(22) Date of filing: 25.03.2010
(51) Int. Cl.: H01M 10/0568, H01M 10/052, H01M 10/0569

(54) **ELECTROLYTE SOLUTION FOR ELECTRICAL ENERGY STORAGE DEVICES, AND ELECTRICAL ENERGY STORAGE DEVICE**

(30) Priority: 27.03.2009 JP 2009078047
(71) Applicant: Asahi Glass Company, Limited, Chiyoda-ku Tokyo 100-8405 (JP)
(72) Inventor: IWAYA, Masao, Chiyoda-ku Tokyo 100-8405 (JP)
(74) Representative: Müller-Boré & Partner Patentanwälte
(86) International application number: PCT/JP2010/055270
(87) International publication number: WO 2010/110388

(57) **Abstract**

To provide an electrolyte solution for storage battery devices, which is free from corroding electrodes and free from impairing battery performance such as electrical conductivity and which is provided with nonflammability and practically sufficient conductivity, and a battery using such an electrolyte solution.

An electrolyte solution for storage battery devices, which comprises a lithium salt represented by the following formula (1) (wherein at least one fluorine atom may be substituted by a perfluoroalkyl group having at most 4 carbon atoms, and n is an integer of from 1 to 5), a hydrofluoroether and a high-permittivity solvent, as the main components:

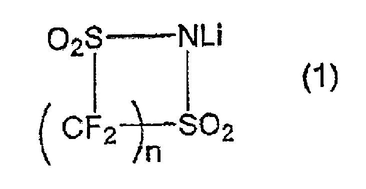

## Description

### TECHNICAL FIELD

The present invention relates to an electrolyte solution for storage battery devices, to be used as e.g. an electrolyte solution for lithium batteries or lithium-ion capacitors, and a storage battery device.

### BACKGROUND ART

An electrolyte solution for non-aqueous electrolyte batteries contains a high-permittivity solvent such as a carbonate type solvent. The carbonate type solvent is capable of dissolving a lithium salt well to exhibit high lithium-ion conductivity and also has a wide potential window. However, a carbonate type solvent to be used for such an electrolyte solution has a low flash point in many cases.

In order to make the flash point high, many proposals have been made for a non-aqueous electrolyte solution wherein a hydrofluoroether (hereinafter referred to as HFE) having no flash point, is used in combination with a polycarbonate type solvent.

For example, Patent Document 1 reports on combined use of LiClO₄ as a lithium salt, propylene carbonate and bis(2,2,2-trifluoroethyl)ether as HFE.

Patent Document 2 reports on combined use of LiPF₆ as a lithium salt, a linear carbonate type solvent and HFE.

As an example of an electrolyte solution wherein the amount of a fluorinated ether is increased, Non-Patent Document 1 reports on a non-aqueous electrolyte wherein lithium bis(pentafluoroethanesulfone)imide (LiBETl) as a lithium salt and methylnonafluorobutyl ether (MFE) are used. In this report, the solvent is made non-flammable by mixing MFE and ethylmethyl carbonate (EMC) in a volume ratio of 80/20.

Further, in a case where diethyl carbonate (DEC) is used as the carbonate, if a battery is prepared by using a non-aqueous electrolyte wherein the content of MFE is too high, there is a demerit such that battery characteristics required for a practical battery (such as rate characteristics or cycle characteristics) are sacrificed. In this document, it has been attempted to add ethylene carbonate (EC) or LiPF₆ to overcome such a demerit. However, as a result, such an attempt has been insufficient to bring the performance to a practically sufficient level as a battery.

Patent Document 3 discloses an electrolyte solution for a lithium battery, wherein LiPF₆, LiN(SO₂CF₃)₂ or LiC(SO₂CF₃)₃ is added to a mixture of a specific HFE with ethylene carbonate or propylene carbonate. This document also discloses that it is unnecessary to add any other highly flammable diluting agent. However, the fluorine-substitution rate of the solvent exemplified as HFE is lower than 60% (the proportion of the total mass of fluorine atoms in the molecular weight) which is required for non-flammability, and thus, non-flammability of the electrolyte solution is not necessarily adequate. On the other hand, if the fluorine substitution rate is made high, there will be a problem that the electrolyte solution may not be able to maintain a uniform state.

### PRIOR ART DOCUMENTS

### PATENT DOCUMENTS

Patent Document 1: Japanese Patent No. 3,304,187
Patent Document 2: Japanese Patent No. 3,218,982
Patent Document 3: JP-A-10-50343

### NON-PATENT DOCUMENT

Non-Patent Document 1: Journal of The Electrochemical Society, 150 (2) A219-A228 (2003)

### DISCLOSURE OF INVENTION

### TECHNICAL PROBLEM

In the system of combined use of a lithium salt (LiClO₄ or LiPF₆) and a carbonate as disclosed in Patent Document 1 or 2, if the amount of HFE having a high flash point is increased, the solubility of the lithium salt decreases to deteriorate the battery performance. For example, in Patent Document 1, HFE is added in an amount of only 1/3 of the entire solvent, and the reason for the addition is to improve charge-discharge cycle characteristics in a secondary battery of at least 4 V. In Patent Document 2, the amount of HFE to be added is up to 50% of the entire solvent, whereby the electrolyte solution has a flash point (Example 5, etc.)

With the electrolyte solution employing a lithium salt such as LiBETl, used in Non-Patent Document 1, the battery characteristics were inadequate.

Lithium bistrifluoromethylsulfonylimide used in Patent Document 3 has a large content of propylene carbonate having a nature to corrode an aluminum current collector commonly used for a lithium-ion secondary battery, and thus is considered to be a composition having a low flash point. Further, the fluorine substitution rate of HFE being low means that HFE has a flash point, and therefore, it was considered possible that there is a method for further increasing the fluorine substitution rate of the solvent. However, in the composition wherein the lithium salt and ethylene carbonate to be used in Patent Document 3 are combined, the electrolyte solution tends to be unstable, and its practical use was considered to be difficult.

It is an object of the present invention to provide an electrolyte solution for storage battery devices, which is free from corroding electrodes and free from impairing battery performance such as electrical conductivity and which is provided with non-flammability and practically sufficient conductivity, and a battery using such an electrolyte solution.

### SOLUTION TO PROBLEM

[1] An electrolyte solution for storage battery devices, which comprises a lithium salt represented by the following formula (1) (wherein at least one fluorine atom may be substituted by a perfluoroalkyl group having at most 4 carbon atoms, and n is an integer of from 1 to 5), a hydrofluoroether and a high-permittivity solvent, as the main components: 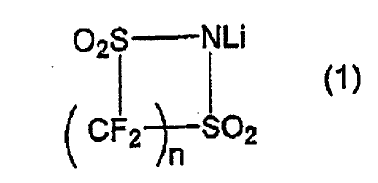
[2] The electrolyte solution for storage battery devices according to [1], wherein the lithium salt represented by the formula (1) is a lithium salt wherein n is 2.
[3] The electrolyte solution for storage battery devices according to [1] or [2], wherein the high-permittivity solvent is a carbonate type solvent.
[4] The electrolyte solution for storage battery devices according to any one of [1] to [3], wherein the hydrofluoroether is CF₃CH₂OCF₂CF₂H, CHF₂CF₂CH₂OCF₂CF₂H, CF₃CH₂OCF₂CHFCF₃, CF₃CF₂CH₂OCF₂CF₂H, CF₃CH₂OCH₂CHFCF₃ or CHF₂CF₂CH₂OCH₂CHFCF₃.
[5] The electrolyte solution for storage battery devices according to any one of [1] to
[4], wherein the volume of the high-permittivity solvent is from 20 to 80% based on the total volume of the hydrofluoroether and the high-permittivity solvent.
[6] The electrolyte solution for storage battery devices according to any one of [1] to [5], wherein the amount of the lithium salt is from 0.1 to 3.0 mol to 1 liter of the total volume of the hydrofluoroether and the high-permittivity solvent.
[7] The electrolyte solution for storage battery devices according to any one of [1] to [6], wherein the storage battery devices are lithium-ion secondary batteries.
[8] A storage battery device using, as its electrolyte solution, the electrolyte solution for storage battery devices as defined in any one of Claims [1] to [6].
[9] The storage battery device according to [8], which is a lithium-ion secondary battery.

### ADVANTAGEOUS EFFECTS OF INVENTION

The electrolyte solution for storage battery devices and the storage battery device using such an electrolyte solution of the present invention are free from corroding electrodes and free from impairing battery performance such as electrical conductivity and are provided with non-flammability and practically sufficient conductivity.

### DESCRIPTION OF EMBODIMENTS

### [Electrolyte solution for storage battery devices]

The electrolyte solution for storage battery devices (hereinafter referred to simply as the electrolyte solution) of the present invention is an electrolyte solution comprising a lithium salt represented by the formula (1), a hydrofluoroether and a high-permittivity solvent. The electrolyte solution is preferably a so-called non-aqueous electrolyte solution. The non-aqueous electrolyte solution is meant for an electrolyte solution which contains no water or which may contain water in an amount not more than the moisture included as contained in the solvent, etc.

The electrolyte solution of the present invention is an electrolyte solution to be used for storage battery devices and is preferably used as an electrolyte solution for lithium batteries or lithium-ion capacitors. Here, the lithium batteries include a lithium-ion secondary battery, a lithium metal secondary battery, a lithium metal primary battery, a lithium air battery, etc. The electrolyte solution of the present invention is preferably an electrolyte solution for a secondary battery such as a lithium-ion secondary battery or a lithium metal secondary battery, particularly preferably an electrolyte solution for a lithium-ion secondary battery.

### (Lithium salt)

The lithium salt in the present invention is an electrolyte which is dissociated in the electrolyte solution to supply lithium ions and is a lithium salt represented by the formula (1) (hereinafter referred to also as the compound (1)). The compound (1) may be used in combination with another lithium salt being an electrolyte. As such another lithium salt being an electrolyte, LiPF₆, LiClO₄ or LiBF₄ is, for example, preferred. For such combined use, LiPF₆ is particularly preferred from the viewpoint of an excellent balance of the electrical conductivity, potential window, etc. In a case where the compound (1) is used in combination with another lithium salt, the ratio of the compound (1):another lithium salt (molar ratio) is preferably adjusted to be from 1:10 to 10:1. When the ratio is adjusted to be within such a range, there is a merit in that the solubility of the lithium salt and excellent electrical conductivity can be maintained. As the lithium salt, it is preferred to use the compound (1) alone.

In the compound (1), at least one of fluorine atoms (fluorine atoms in n difluoromethylene groups) may be substituted by a perfluoroalkyl group having at most 4 carbon atoms. When fluorine atoms are substituted by perfluoroalkyl groups, the number of fluorine atoms to be substituted by perfluoroalkyl groups is preferably at most 2, more preferably 1. The number of carbon atoms in a perfluoroalkyl group is preferably at most 2, and a trifluoromethyl group is particularly preferred as the perfluoroalkyl group. The compound (1) is more preferably a compound wherein no fluorine atom is substituted by a perfluoroalkyl group.

In the compound (1), n is an integer of from 1 to 5. Specifically, lithium salts represented by compounds (1-1) to (1-5) may be mentioned. Among them, the compound (1-2) wherein n is 2, is particularly preferred, since an electrolyte solution having high electrical conductivity can thereby be easily obtainable.

The compound (1) is a compound disclosed in a document such as WO2006/106960 or W02008/111588 relating to inventions by the present inventors, or a compound which can be prepared by the preparation method disclosed in such a document. Otherwise, FO₂S-(CF₂)ₙ-SO₂F may be prepared by the method disclosed in a document (J. Fluorine. Chem., 44 (1989) 299-307), and this compound is subjected to cyclization and lithium salt-modification by a method disclosed in a document such as the above-mentioned W02006/106960, to prepare it.

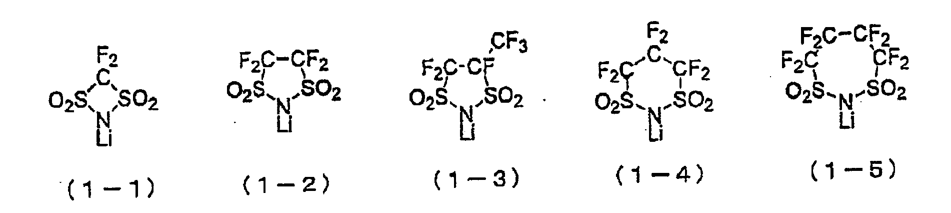

The content of the lithium salt in the electrolyte solution (when another lithium salt is used in combination, the total content including such another lithium salt) is preferably from 0.1 to 3.0 mol, more preferably from 0.5 to 2.0 mol, particularly preferably from 0.8 to 1.5 mol, to 1 liter of the total volume of HFE and the high-permittivity solvent. By adjusting the content to be within such a range, it is possible to obtain good electrical conductivity, while maintaining the uniform solution state.

### (Hydrofluoroether)

The hydrofluoroether is a solvent which imparts non-flammability to the electrolytic solution. The hydrofluoroether is not particularly restricted so long as it is one having no flash point and is capable of dissolving the lithium salt well, but in order not to have a flash point, the proportion of the total mass of fluorine atoms to the molecular weight is preferably at least 50%, and in order to dissolve the lithium salt sufficiently, the proportion of the total mass of fluorine atoms to the molecular weight is preferably at most 75%.

Further, with respect to the hydrofluoroether, if the number of carbon atoms is too small, the boiling point tends to be too low, and if it is too much, the viscosity tends to be high. Accordingly, a compound having a total number of carbon atoms being from 5 to 10 is preferred, and a compound having a total number of carbon atoms being from 5 to 8 is particularly preferred. The molecular weight of the hydrofluoroether is preferably from 200 to 800, particularly preferably from 200 to 500. The number of etheric oxygen atoms in the hydrofluoroether is influential over the flammability, and accordingly, the number of etheric oxygen atoms is preferably from 1 to 4, particularly preferably 1 or 2. As specific examples of the hydrofluoroether, compounds represented by the following formulae may be mentioned.

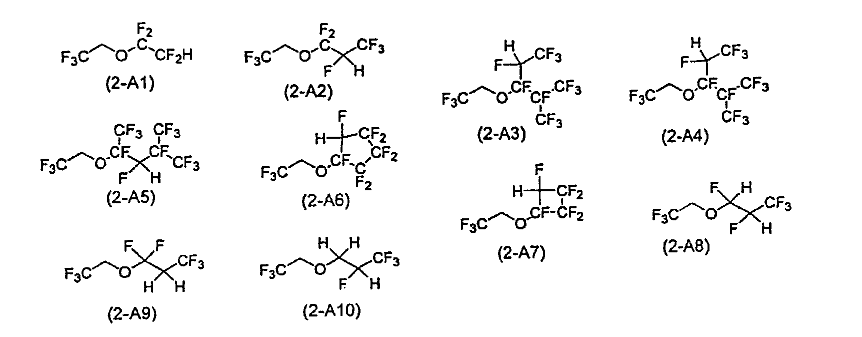

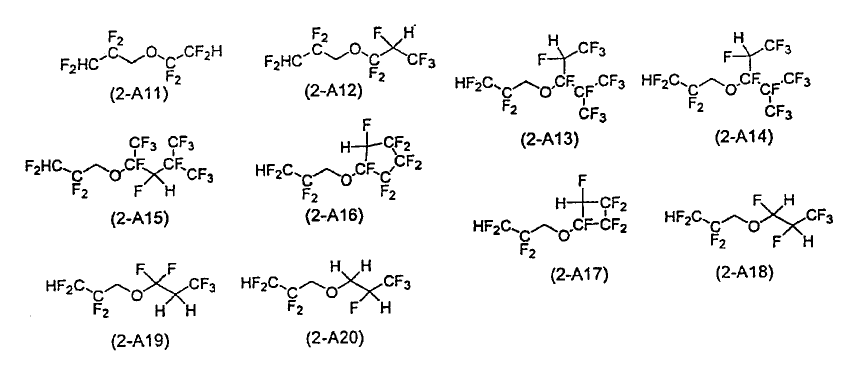

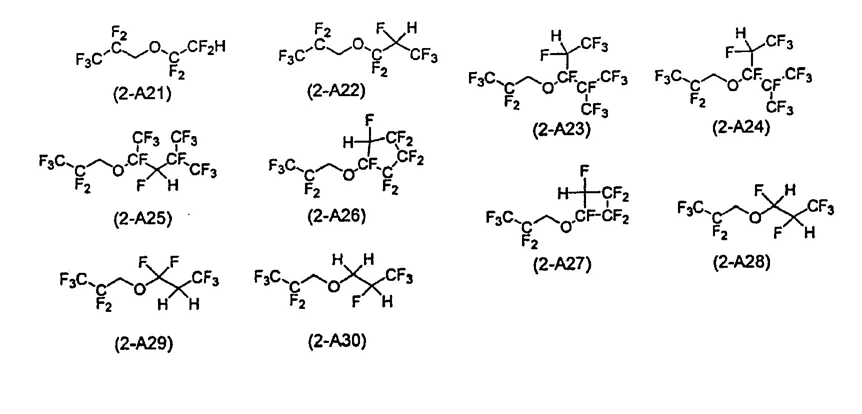

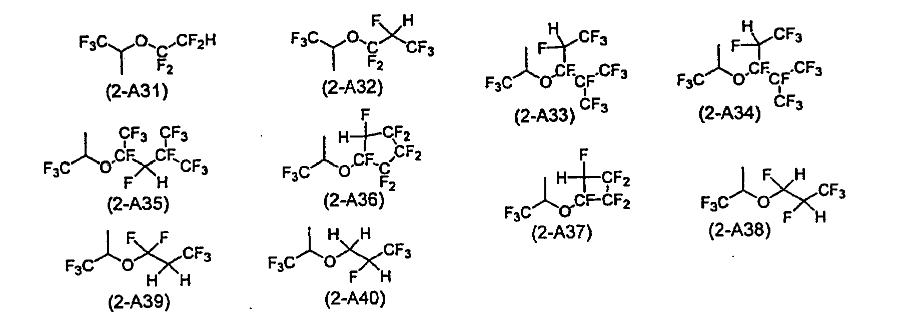

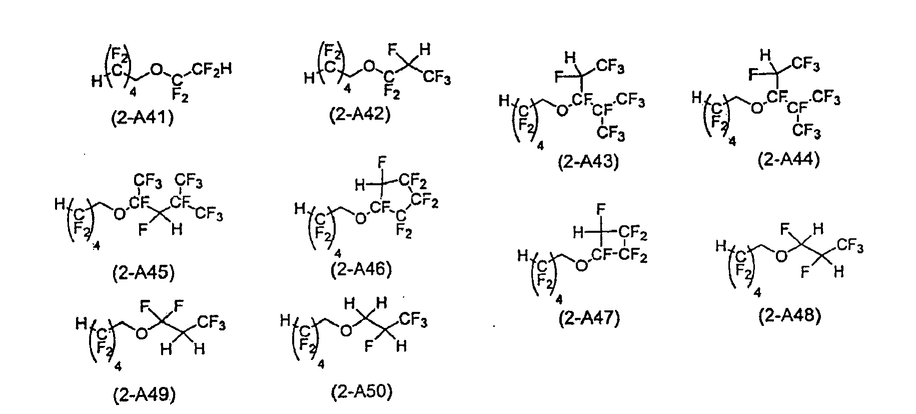

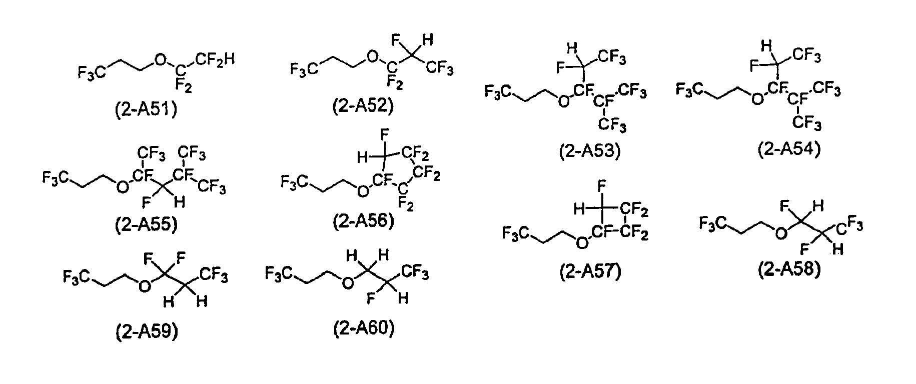

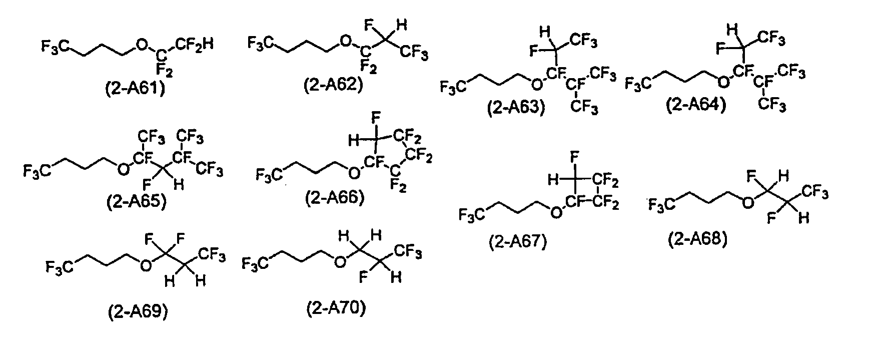

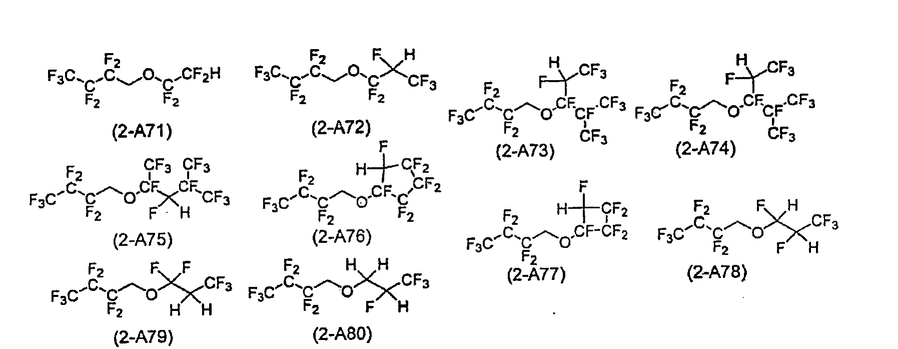

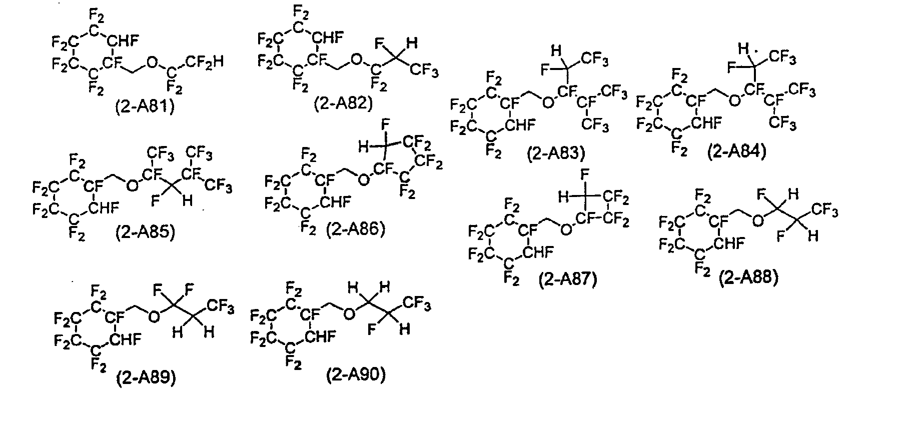

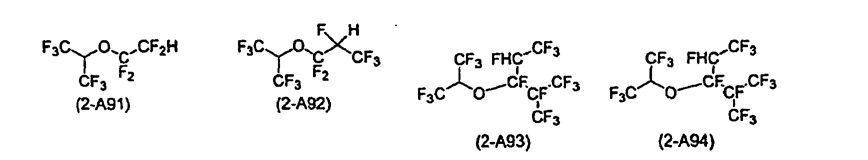

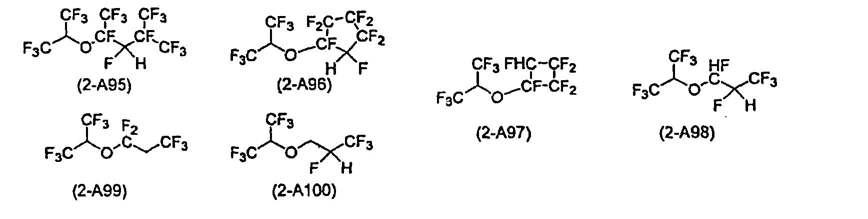

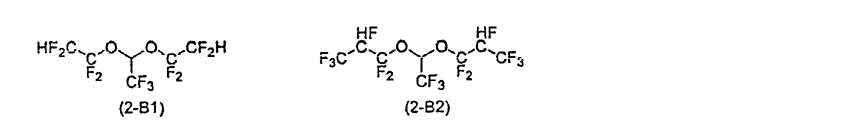

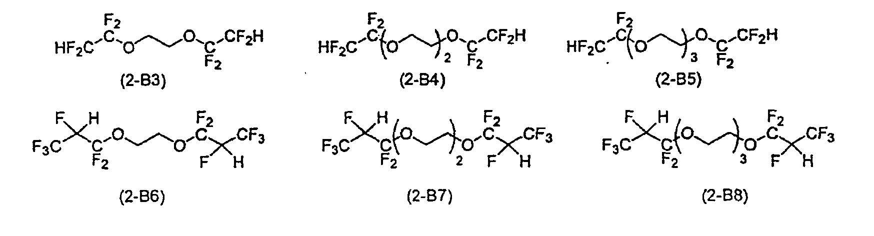

CF₃CF₂CF₂CF₂OCH₃, CF₃CF₂CF₂CF₂CF₂CF₂OCH₃, (CF₃)₂CFCF₂OCH₃, CF₃CF₂CF₂CF₂OC₂H₅, CF₃CF₂CF₂CF₂CF₂CF₂OC₂H₅, (CF₃)₂CFCF(CF₂CF₃)OCH₃, (CF₃)₂CFCF(CF₂CF₃)OC₂H₅.

Since it is thereby easy to dissolve the lithium salt uniformly and to obtain an electrolyte solution excellent in non-flammability and having high electrical conductivity, the hydrofluoroether is preferably a compound (2-A), more preferably CF₃CH₂OCF₂CF₂H (compound (2-A1)) (tradename: AE-3000, manufactured by Asahi Glass Company, Limited), CHF₂CF₂CH₂OCF₂CF₂H (compound (2-A11)), CF₃CH₂OCF₂CHFCF₃ (compound (2-A2)), CF₃CF₂CH₂OCF₂CF₂H (compound (2-A21)), CF₃CH₂OCH₂CHFCF₃ (compound (2-A10)), or CHF₂CF₂CH₂OCH₂CHFCF₃ (compound (2-A20)), particularly preferably compound (2-A1) or compound (2-A21).

### (High-permittivity solvent)

Further, the electrolyte solution of the present invention is an electrolyte solution comprising a lithium salt, a hydrofluoroether and a high-permittivity solvent. As the electrolyte solution contains a high-permittivity solvent, the solubility of the lithium salt in the hydrofluoroether will be improved. As such a high-permittivity solvent, a carbonate type solvent is preferred from the viewpoint of its structure. Carbonate type solvents may be classified into a cyclic carbonate and a linear carbonate, and either one may be used, or both may be used.

If the content of the high-permittivity solvent becomes too large, the non-flammability tends to deteriorate. Accordingly, the amount of the high-permittivity solvent is such that the volume of the high-permittivity solvent is preferably from 20 to 80%, particularly preferably from 40 to 70%, based on the total volume of HFE and the high-permittivity solvent.

In the electrolyte solution of the present invention, the specific lithium salt is used as an electrolyte, whereby even if the amount of the high-permittivity solvent to be used is small, the solubility of the electrolyte in the electrolyte solution is high. Accordingly, it is possible to prepare an electrolyte solution excellent in non-flammability and having a high flash point.

The linear carbonate is preferably at least one compound selected from the group consisting of dimethyl carbonate, diethyl carbonate, methylethyl carbonate, di-n-propyl carbonate, methyl-n-propyl carbonate, ethyl-n-propyl carbonate, methylisopropyl carbonate, ethyl-n-propyl carbonate, ethylisopropyl carbonate, di-n-propyl carbonate, diisopropyl carbonate and 3-fluoropropylmethyl carbonate. From the viewpoint of the availability and the nature of the electrolyte solution, dimethyl carbonate, diethyl carbonate or methylethyl carbonate is particularly preferred.

The cyclic carbonate is preferably at least one cyclic carbonate selected from the group consisting of propylene carbonate, ethylene carbonate, butylene carbonate, 4-chloro-1,3-dioxolan-2-one, 4-fluoro-1,3-dioxolan-2-one, 4-trifluoromethyl-1,3-dioxolan-2-one, vinylene carbonate and dimethylvinylene carbonate. From the viewpoint of the availability and the nature of the electrolyte solution, ethylene carbonate, propylene carbonate, 4-fluoro-1,3-dioxolan-2-one or vinylene carbonate is particularly preferred.

Further, in combination with the above carbonate type solvent, a chain or cyclic carbonate having an effect as a property-improving additive as described hereinafter, may be used as a carbonate type solvent. The carbonate type solvent having an effect as a property-improving additive may, for example, be a carbonate compound such as fluoroethylene carbonate, trifluoropropylene carbonate, phenylethylene carbonate, erythritan carbonate or spiro-bis-dimethylene carbonate.

Further, at the time of charging by a secondary battery using an electrolyte solution containing a cyclic carbonate, the cyclic carbonate will decompose and form a stable coating film on the surface of a negative electrode (such as a carbon electrode). The coating film formed by the cyclic carbonate is capable of reducing a resistance at the electrode interface, whereby it is possible to obtain an effect to promote intercalation of lithium ions to the negative electrode. That is, the impedance at the negative electrode interface is made small by the coating film formed by the cyclic carbonate in the electrolyte solution, whereby intercalation of lithium ions to the negative electrode will be promoted.

In a case where a linear carbonate and a cyclic carbonate are used in combination, the ratio of the linear carbonate (volume V₁) to the cyclic carbonate (volume V₂) (i.e. volume ratio V₁:V₂) is preferably from 1:10 to 10:1.

### (Other solvents)

The electrolyte solution of the present invention may contain other solvents in addition to the hydrofluoroether, the linear carbonate and the cyclic carbonate, within a range wherein the electrolyte solution undergoes no phase separation.

Such other solvents include, for example, a carboxylic acid ester such as an alkyl propionate, a dialkyl malonate or an alkyl acetate, a cyclic ester such as y-butyrolactone, a cyclic sulfonic acid ester such as propanesultone, an alkyl sulfonate and an alkyl phosphate. Here, a glyme is excluded from such other solvents.

Further, as such other solvents, solvents having an effect as a property-improving additive as described hereinafter may be used. A solvent having an effect as such a property-improving additive may, for example, be 1,3-propanesultone, 1,4-butanesultone or methyl methanesulfonate.

The content of such other solvents is at most 10 vol%, preferably at most 5 vol%, when the amount of all solvents to be used for such an electrolyte solution is 100 vol%. It is preferred not to use such other solvents.

Further, the electrolyte solution of the present invention may contain other components, as the case requires, to improve the functions of the electrolyte solution. Such other components include, for example, a conventional overcharge-preventing agent, a dehydrating agent, a deoxidizing agent, and a property-improving additive to improve the cycle characteristic and the capacity-maintaining property after high temperature storage. Here, as mentioned above, the electrolyte solution of the present invention is preferably a so-called non-aqueous electrolyte solution containing substantially no water.

The overcharge-preventing agent may, for example, be an aromatic compound such as biphenyl, an alkyl biphenyl, terphenyl, a partially hydrogenated terphenyl, cyclohexylbenzene, t-butylbenzene, t-amylbenzene, diphenyl ether or dibenzofuran; a partially fluorinated product of the above aromatic compound, such as 2-fluorobiphenyl, o-cyclohexylfluorobenzene or p-cyclohexylfluorobenzene; a fluorinated anisole compound such as 2,4-difluoroanisole, 2,5-difluoroanisole or 2,6-difluoroanisole. One of such overcharge-preventing agents may be used alone, or two or more of them may be used in combination.

In a case where the electrolyte solution contains an overcharge-preventing agent, the content of the overcharge-preventing agent in the electrolyte solution is preferably from 0.1 to 5 mass%. By incorporating at least 0.1 mass% of the overcharge-preventing agent to a non-aqueous electrolyte solution, it becomes easier to prevent rupture or ignition of a secondary battery by overcharge, and it becomes possible to use the secondary battery more stably.

The dehydrating agent may, for example, be molecular sieves, sodium sulfate, magnesium sulfate, calcium hydride, sodium hydride, potassium hydride or lithiumaluminum hydride. As a solvent to be used for the electrolyte solution of the present invention, it is preferred to use one which has been dehydrated by means of the above dehydrating agent, followed by rectification. Otherwise, a solvent which has been dehydrated by means of the above dehydrating agent, without carrying out rectification, may be used.

The property-improving additive may, for example, be a carboxylic acid anhydride such as succinic anhydride, glutaric anhydride, maleic anhydride, citraconic anhydride, glutaconic anhydride, itaconic anhydride, diglycolic anhydride, cyclohexanedicarboxylic acid anhydride, cyclopentanetetracarboxylic acid dianhydride or phenylsuccinic anhydride; a sulfur-containing compound such as ethylene sulfite, busulfan, sulfolane, sulfolene, dimethyl sulfone, diphenyl sulfone, methylphenyl sulfone, dibutyl disulfide, dicyclohexyl disulfide, tetramethylthiuram monosulfide, N,N-dimethylmethanesulfonamide or N,N-diethylmethanesulfonamide; a nitrogen-containing compound such as 1-methyl-2-pyrrolidinone, 1-methyl-2-piperidone, 3-methyl-2-oxazolidinone, 1,3-dimethyl-2-imidazolidinone or N-methylsuccinimide; or a fluorinated aromatic compound such as fluorobenzene, difluorobenzene, hexafluorobenzene or benzotrifluoride. One of these property-improving additives may be used alone, or two or more of them may be used in combination.

In a case where a non-aqueous electrolyte solution contains the property-improving additive (which means also a solvent having an effect as the above property-improving additive), the content of the property-improving additive in the electrolyte solution is preferably from 0.1 to 5 mass%.

Further, the electrolyte solution of the present invention preferably has an electrical conductivity of at least 0.25 S-m⁻¹ with a view to obtaining a practically sufficient electrical conductivity. Further, it is preferred that the viscosity (20°C) measured by a rotary viscometer is from 0.1 to 20 cP.

Further, the electrolyte solution of the present invention preferably has a flash point of at least 70°C by a Cleveland open cup flash point test (in accordance with JIS K2265) and particularly preferably shows no flash point. The above flash point of the electrolyte solution can be adjusted by adjusting the type or content of the hydrofluoroether. For example, when the amount of the hydrofluoroether is at least 20 vol% based on the amount of all solvents, the electrolyte solution tends to show no flash point, but such type and content may suitably be changed taking into consideration also other required properties as the electrolyte solution.

Further, the electrolyte solution of the present invention is preferably an electrolyte solution, of which the potential range (potential window) where the electrolytic current value reaches 0.05 mA/cm² is a range wider than a range of from 0.2 V to 4.2 V. The value for such a potential window is a value represented by the potential based on the lithium metal. The measurement of the potential window can be carried out by the method which will be described in Examples.

The compound (1) in the electrolyte solution of the present invention has a cyclic structure and thus has a large dipole moment as compared with the chain lithium salt. A compound having a large dipole moment usually has low solubility in a low-permittivity solvent or in a low polarity solvent. Therefore, it has been an unexpected discovery that the compound (1) is well soluble in HFE which is an extremely low-permittivity and low polarity solvent. In the electrolyte solution of the present invention in which HFE can be used in a sufficient amount as an electrolyte solution, excellent non-flammability can be obtained. Further, a carbonate which is commonly used to secure solubility of the lithium salt, is not required, whereby there is no worry about formation of carbon dioxide gas, and non-flammability can be maintained for a long period of time.

Further, the compound (1) as the lithium salt of the present invention is free from corroding an aluminum electrode.

### [secondary battery]

The electrolyte solution of the present invention is particularly preferably a non-aqueous electrolyte solution for a lithium-ion secondary battery. Now, a lithium-ion secondary battery (hereinafter referred to simply as a secondary battery) constituted by such a non-aqueous electrolyte solution, a negative electrode and a positive electrode, will be described.

The negative electrode may be an electrode containing a negative electrode active material capable of electrochemically charging or discharging lithium ions. As the negative electrode active material, a known negative electrode active material for lithium-ion secondary batteries may be used, and a carbon material such as graphite or amorphous carbon, a metal such as metal lithium or a lithium alloy, or a metal compound, capable of charging or discharging lithium ions may be mentioned. One of these negative electrode active materials may be used alone, or two or more of them may be used in combination.

Among them, a carbon material is particularly preferred as the negative electrode active material. Further, as the carbon material, graphite or a carbon material having the surface of graphite covered with carbon which is amorphous as compared with the graphite, is particularly preferred.

The graphite is preferably such that the value d (interlayer distance, hereinafter referred to simply as the value d) of the lattice plane (002 plane) obtained by the X-ray diffraction by the method of the Japan Society for Promotion of Scientific Research is from 0.335 to 0.338 nm, more preferably from 0.335 to 0.337 nm. Further, the crystallite size (Lc) obtained by the X-ray diffraction by the method of the Japan Society for Promotion of Scientific Research is preferably at least 30 nm, more preferably at least 50 nm, further preferably at least 100 nm. The ash content of the graphite is preferably at most 1 mass%, more preferably at most 0.5 mass%, further preferably at most 0.1 mass%.

Further, the carbon material having the surface of graphite covered with amorphous carbon is preferably such that graphite having a value d of from 0.335 to 0.338 nm is used as a nucleus, and the surface of the graphite is covered with amorphous carbon having a value d larger than the graphite, and the ratio of the graphite (mass: W_{A}) as the nucleus to the amorphous carbon (mass: W_{B}) covering the graphite is preferably from 80/20 to 99/1 by mass ratio (W_{A}/W_{B}). By using such a carbon material, it becomes easy to produce a negative electrode which has a high capacity and is hardly reactive with the electrolyte solution.

The particle size of the carbon material is preferably at least 1 µm, more preferably at least 3 µm, further preferably at least 5 µm, particularly preferably at least 7 µm, by a median diameter by a laser diffraction/scattering method. Further, the upper limit of the particle size of the carbon material is preferably at most 100 µm, more preferably at most 50 µm, further preferably at most 40 µm, particularly preferably at most 30 µm.

The specific surface area of the carbon material by BET method is preferably at least 0.3 m²/g, more preferably at least 0.5 m²/g, further preferably at least 0.7 m²/g, particularly preferably at least 0.8 m²/g. The upper limit of the specific surface area of the carbon material is preferably at most 25.0 m²/g, more preferably at most 20.0 m²/g, further preferably at most 15.0 m²/g, particularly preferably at most 10.0 m²/g.

The carbon material preferably has a value R **(=I_{B}/I_{A})** of from 0.01 to 0.7, which is represented by a ratio of the peak intensity I_{B} of a peak P_{B} within a range of from 1,300 to 1,400 cm⁻¹ to the peak intensity I_{A} of a peak P_{A} within a range of from 1,570 to 1,620 cm⁻¹ when the carbon material is analyzed by the Raman spectrum using an argon ion laser beam. Further, the half value width of the peak P_{A} is preferably at most 26 cm⁻¹, particularly preferably at most 25 cm⁻¹.

The metal useful as a negative electrode active material other than metal lithium, may, for example, be Ag, Zn, Al, Ga, In, Si, Ge, Sn, Pb, P, Sb, Bi, Cu, Ni, Sr, Ba or Ti. Further, the lithium alloy may be an alloy of lithium with the above metal. Further, the metal compound may, for example, be an oxide of the above metal.

Among them, at least one metal selected from the group consisting of Si, Sn, Ge, Ti and Al, or a metal compound or a lithium alloy containing such a metal, is preferred. At least one metal selected from the group consisting of Si, Sn, Ti and Al, or a metal compound or a lithium alloy containing such a metal, is more preferred.

The metal capable of charging or discharging lithium ions, or the metal compound or the lithium alloy containing such a metal, usually has a large capacity per unit mass, as compared with the carbon material represented by graphite, and thus, it is suitable for a secondary battery which is required to have a higher energy density.

The positive electrode may be an electrode containing a positive electrode active material which is capable of electrochemically charging or discharging lithium ions.

As such a positive electrode active material, a known positive electrode active material for lithium-ion secondary batteries may be used. For example, a lithium-containing metal oxide such as lithium cobalt oxide, lithium nickel oxide or lithium manganese oxide, a chalcogen compound, a phosphoric acid olivine metal lithium salt or a silicic acid olivine metal lithium salt may be mentioned.

The lithium-containing composite oxide may, for example, be LiCoO₂, LiNiO₂, LiMnO₂, LiMn₂O₄, Li_{X}Co_{1-y}M_{y}O₂, Li_{X}Ni_{1-y}M_{y}O₂ or Li_{X}m_{1-y}M_{y}O₂ (wherein M is at least member selected from Fe, Co, Ni, Mn, Mg, Cu, Zn, Al, Sn, B, Ga, Cr, V, Sr and Ti, 0.4≦x≦1.2, and 0≦y≦0.6).

The chalcogen compound may, for example, be TiO₂, MnO₂, MoO₃, V₂O₅, TiS₂ or MoS₂.

The phosphoric acid olivine metal lithium salt may, for example, be LiFePO₄, LiMnPO₄, LNiPO₄, LiCoPO₄, Li₂FePO₄F, Li₂MnPO₄F, Li₂NiPO₄F or Li₂CoPO₄F.

The silicic acid olivine metal lithium salt may, for example, be LiFeSiO₄, LiMnSiO₄, LiNiSiO₄ or LiCoSiO₄.

One of these positive electrode active materials may be used alone, or two or more of them may be used in combination.

Among them, a lithium-containing metal oxide having an α-NaCrO₂ structure as a matrix, such as LiCoO₂, LiNiO₂ or LiMnO₂, or a lithium-containing metal oxide having a spinel type structure as a matrix, such as LiMn₂O₄, is preferred from such a viewpoint that the discharge voltage is high, and the electrochemical stability is high.

For the preparation for an electrode, a binder to bind the negative electrode active material or the positive electrode active material is used.

As such a binder to bind the negative electrode active material and the positive electrode active material, an optional binder may be used so long as it is a material stable against the electrolyte solution and the solvent to be used at the time of producing the electrodes. The binder may, for example, be a fluororesin such as polyvinylidene fluoride or polytetrafluoroethylene, a polyolefin such as polyethylene or polypropylene, a rubber or elastomer such as a styrene/butadiene rubber, isoprene rubber or butadiene rubber, or an acrylic acid type polymer such as an ethylene/acrylic acid copolymer or an ethytene/methacryfic acid copolymer. One of these binders may be used alone, or two or more of them may be used in combination.

In order to increase the mechanical strength and electrical conductivity, a thickener, an electrically conductive material, a filler or the like may be incorporated in the electrode.

The thickener may, for example, be carboxymethylcellulose, methylcellulose, hydroxymethylcellulose, ethylcellulose, polyvinyl alcohol, oxidized starch, phosphorylated starch or casein. One of these thickeners may be used alone, or two or more of them may be used in combination.

The electrically conductive material may, for example, be a metal material such as copper or nickel, or a carbon material such as graphite or carbon black. One of these electrically conductive materials may be used alone, or two or more of them may be used in combination.

An electrode can be prepared by adding a binder, a thickener, an electrically conductive material, a solvent, etc. to a negative electrode active material or a positive electrode active material, to form a slurry, which is then applied to a current collector, followed by drying. In such a case, the electrode is preferably pressed and densified by pressing after the drying.

The density of the negative electrode active material layer after drying and pressing is usually at least 1.45 g/cm³, preferably at least 1.55 g/cm³, particularly preferably at least 1.60 g/cm³. The higher the density of the negative electrode active material layer, the higher the capacity of the secondary battery. Whereas, the density of the positive electrode active material layer after drying and pressing is usually at least 3.0 g/cm³. If the density of the positive electrode active material layer is too low, the capacity of the secondary battery is likely to be inadequate.

As the current collector, various type of current collector may be used. However, usually a metal or an alloy is employed. As a current collector for a negative electrode, copper, nickel, stainless steel or the like may be mentioned, and copper is preferred. Whereas, as a current collector for a positive electrode, a metal such as aluminum, titanium or tantalum, or its alloy may be mentioned, and aluminum or its alloy is preferred.

The shape of the secondary battery may be selected depending upon the particular application, and it may be a coin-form or a cylindrical form Likewise, the shapes of the positive electrode and the negative electrode may also be suitably selected to meet with the shape of the secondary battery.

Further, in a case where the positive electrode active material is a lithium-containing metal oxide and/or a chalcogen compound, the secondary battery of the present invention is preferably a secondary battery to be used at a charging voltage of at least 4.0 V (the potential based on lithium metal). For example, it may be a secondary battery having an electrolyte solution of the present invention which has a potential window in a wider range than the range of from 0.2 V to 4.0 V. Whereas, in a case where the positive electrode active material is a phosphoric acid olivine metal lithium salt and/or a silicic acid olivine metal lithium salt, it is preferably a secondary battery which is used at a charging voltage of at least 3.4 V (the potential based on lithium metal). For example, it may be a secondary battery having the electrolyte solution of the present invention which has a potential window in a wider range than the range of from 0.2 V to 3.4 V.

Between the positive electrode and the negative electrode, a porous film is usually interposed as a separator in order to prevent short circuiting. In such a case, the electrolyte solution is used as impregnated to the porous film. The material and shape of the porous film are not particularly limited, so long as it is stable against the electrolyte solution and is excellent in the liquid-maintaining property. A porous sheet or nonwoven fabric made of a polyolefin such as polyethylene or polypropylene is preferred. Further, the rear surface of this electrode may be coated with a ceramic material, or the porous film may be composited with an inorganic material in order to maintain the mechanical strength at the time of dissolution of the polyolefin porous film by runaway of the battery.

The material for a battery exterior package to be used for the electrolyte solution of the present invention may also be a material which is commonly used for secondary batteries, and nickel-plated iron, stainless steel, aluminum or its alloy, nickel, titanium or a resin material may, for example, be mentioned.

The secondary battery using the electrolyte solution of the present invention is free from ignition even if an excessive burden is caused to the secondary battery by e.g. overcharge, internal short-circuit or external short-circuit, and thus is excellent in non-flammability. Accordingly, it is unnecessary to provide a complex monitoring system to monitor such an excessive burden, in the secondary battery.

Therefore, the secondary battery using the electrolyte solution of the present invention is useful for various applications to e.g. mobile phones, portable game machines, digital cameras, digital video cameras, electric tools, notebook computers, handheld terminals, portable music players, electric cars, hybrid automobiles, electric power storage systems, artificial satellites, submarines, aircrafts, ships, electric cars, etc.

As described in the foregoing, a storage battery device using the electrolyte solution of the present invention is free from corrosion of electrodes and is provided with non-flammability for a long period of time and practically sufficient electrical conductivity.

### EXAMPLES

### [Preparation Example 1] Preparation Example for carbonate type mixed solvent

Ethylmethyl carbonate/ethylene carbonate in a volume ratio of 1/1 was mixed to prepare mixed solvent 1.

### [Preparation Example 2] Preparation Example for carbonate type solvent+HFE mixed solvent

Ethylmethyl carbonate/ethylene carbonate/CF₃CH₂OCF₂CF₂H in a volume ratio of 1.5/1.5/1 was mixed to prepare mixed solvent 2.

### [Preparation Example 3] Preparation Example for carbonate type solvent+HFE mixed solvent

Ethylmethyl carbonate/ethylene carbonate/CF₃CH₂OCF₂CF₂H in a volume ratio of 1/1/1 was mixed to prepare mixed solvent 3.

### [Preparation Example 4] Preparation Example for carbonate type solvent+HFE mixed solvent

Ethylmethyl carbonate/ethylene carbonate/CF₃CH₂OCF₂CF₂H in a volume ratio of 1/1/2 was mixed to prepare mixed solvent 4.

### [Preparation Example 5] Preparation Example for carbonate type solvent+HFE mixed solvent

Ethylmethyl carbonate/ethylene carbonate/CF₃CH₂OCF₂CF₂H in a volume ratio of 1/1/3 was mixed to prepare mixed solvent 5.

### [Preparation Example 6] Preparation Example for carbonate type solvent+HFE mixed solvent

Ethylmethyl carbonate/ethylene carbonate/CF₃CH₂OCF₂CF₂H in a volume ratio of 1.5/1.5/7 was mixed to prepare mixed solvent 6.

### [Evaluation Example 1] Evaluation of solubility

To each of the mixed solvents prepared in Preparation Examples 1 to 6, LiPF₆ and the compound represented by the above chemical formula (1-2) (hereinafter referred to as CTFSl-Li) were dissolved until they were saturated, and the saturated solubilities were evaluated. The results are shown in the following Table 1. Here, CTFSI-Li was synthesized by the method disclosed in W02006/106960.

As is evident from Table 1, the solubility of LiPF₆ gradually decreases as the content of HFE (CF₃CH₂OCF₂CF₂H) increases, and in Preparation Examples 4 to 6 wherein the HFE content becomes at least 50 vol% in the solvent, it becomes impossible to secure a practically sufficient solubility. Further, in Preparation Examples 5 and 6, immediately after the addition of LiPF₆, phase separation of the solvent into two phases takes place, such being unacceptable as an electrolyte solution.

On the other hand, CTFSI-Li of the present invention exhibits good solubility in HFE. Further, even when the HFE content is large, it has sufficient solubility, and no phase separation is observed.

**TABLE 1**

| Preparation Example | Saturated solubility of LiPF₆ (mol/L) | Saturated solubility of CTFSI-Li (mol/L) |
|---|---|---|
| 1 | Not evaluated | 3.0 |
| 2 | 1.2 | 2.4 |
| 3 | 1.0 | 2.4 |
| 4 | 0.6 | 2.0 |
| 5 | Not dissolved | >1.0 |
| 6 | Not dissolved | >1.0 |

### [Preparation Example 1 for electrolyte solution (Reference Example)] Preparation Example for electrolyte solution comprising LiPF₆+carbonate type solvent

To the mixed solvent prepared in Preparation Example 1, LiPF₆ was dissolved at a concentration of 1 mol/L to prepare electrolyte solution 1.

### [Preparation Example 2 for electrolyte solution (Example of the present invention)]

### Preparation Example for electrolyte solution comprising CTFSI-Li+carbonate type solvent+HEF mixed solvent

To the mixed solvent prepared in Preparation Example 5, CTFSI-Li was dissolved at a concentration of 1 mol/L to prepare electrolyte solution 2.

### [Preparation Example 3 for electrolyte solution (Example of the present invention)]

### Preparation Example for electrolyte solution comprising CTFSI-Li+carbonate type solvent+HEF mixed solvent

To the mixed solvent prepared in Preparation Example 6, CTFSI-Li was dissolved at a concentration of 1 mol/L to prepare electrolyte solution 3.

### [Preparation Example 4 for electrolyte solution (Reference Example)] Preparation Example for electrolyte solution comprising CF₃SO₂N(Li)SO₂CF₃+carbonate type solvent+HEF

To the mixed solvent prepared in Preparation Example 5, CF₃SO₂N(Li)SO₂CF₃ was dissolved at a concentration of 1 mol/L to prepare electrolyte solution 4.

### [Evaluation Example 2] Evaluation of electrical conductivity

Measurements of electrical conductivities of electrolyte solutions 2 and 3 obtained in Preparation Examples 2 and 3 for the above electrolyte solutions (each being Example of the present invention) were carried out at 25°C by means of an electrical conductivity meter (glass electrode type hydrogen ion concentration meter WM-22EP manufactured by DKK-TOA CORPORATION). The results are shown in Table 2. From Table 2, it is evident that the electrolyte solutions 2 and 3 having CF₃CH₂OCF₂CF₂H added in a sufficient amount to secure the safety, exhibit practical electrical conductivities.

**TABLE 2**

| Electrolyte solution | Electrical conductivity (S/m) |
|---|---|
| 2 | 0.44 |
| 3 | 0.25 |

### [Evaluation Example 3] Evaluation of flammability

10 ml of each of the electrolyte solutions 1 to 3 prepared as described above was put into a 30 ml beaker, and ignition was attempted by a lighter at 25°C. The electrolyte solution 1 was ignited immediately, but the electrolyte solutions 2 and 3 were not ignited even if ignition was attempted for at least 1 minute.

### [Evaluation Example 4] Evaluation of aluminum corrosiveness

With respect to the electrolyte solutions 2 (Example of the present invention) and 4 (Reference Example) prepared as described above, LSV (linear sweep voltammetry) measurement using aluminum as a working electrode was carried out to measure the aluminum corrosiveness (potential based on lithium metal) of the electrolyte solutions.

As the working electrode, an aluminum plate of 2.0 cm x 1.5 cm was used; as the counter electrode, a platinum plate of 2.0 cm x 1.5 cm was used; and as the reference electrode, a lithium ribbon having a width of 3 mm and a thickness of 0.5 mm was used. The sweep rate was 5 mV.s⁻¹. Here, a potential at the time when the current value by aluminum corrosion had exceeded 0.01 mA·cm⁻² was taken as the aluminum corrosion potential. The results are shown in Table 3. With the electrolyte solution using CF₃SO₂N(Li)SO₂CF₃ as Li ions, aluminum was corroded at less than 4.0 V within the practical operation range of the battery. However, with the electrolyte solution system using CTFSI-Li of the present invention, no aluminum corrosion occurred in the practical operation range of the battery.

**TABLE 3**

| Electrolyte solution | Aluminum corrosion potential V (vs Li/Li⁺) |
|---|---|
| 2 | 4.57 |
| 4 | 3.93 |

### [Preparation Example 1 for secoridary battery (Example of the present invention)]

LiCoO₂ (tradename: "Selion C" manufactured by AGC Seimi Chemical Co., Ltd., 90 parts by mass), carbon black (tradename: "DENKABLACK" manufactured by Denki Kagaku Kogyo Kabushiki Kaisha, 5 parts by mass) and polyvinylidene fluoride (5 parts by mass) are mixed, and N-methyl-2-pyrrolidone is added thereto to obtain a slurry. The slurry is uniformly applied and dried on both sides of an aluminum foil having a thickness of 20 µm, followed by pressing so that the density of a positive electrode active material layer will be 3.0 g/cm³, thereby to prepare a LiCoO₂ positive electrode.

The above LiCoO₂ positive electrode, a lithium metal foil having the same area as the LiCoO₂ positive electrode and a separator made of polyethylene are laminated in the order of the lithium metal foil, the separator and the LiCoO₂ positive electrode to prepare a battery element. Then, in a bag made of a laminate film having each side of aluminum (thickness: 40 µm) covered by a resin layer (polyethylene resin), the above battery element is accommodated so that terminals of the LiCoO₂ positive electrode and negative electrode (lithium metal foil) of the battery element extend out of the bag.

Then, the electrolyte solution 2 (Example of the present invention) prepared as described above, is injected into the bag, followed by vacuum sealing to prepare a sheet-form electrolyte solution secondary battery 1.

### [Preparation Example 2 for secondary battery (Reference Example)]

A sheet-form electrolyte solution secondary battery 2 is prepared in the same manner as in Preparation Example 1 for a secondary battery except that the electrolyte solution 1 (Reference Example) prepared as described above is used as an electrolyte solution.

### [Method for evaluating cycle characteristics]

Evaluation of cycle characteristics of a secondary battery is carried out by the following method.

With a monopolar cell sheet-form electrolyte solution secondary battery comprising LiCoO₂ positive electrode/lithium metal foil in a state sandwiched by glass plates in order to increase adhesion between electrodes, a cycle of charging it to 4.3 V with a constant current corresponding to 0.1 C and then discharging it to 3 V with a constant current corresponding 0.1 C is carried out at 25°C for 2 cycles. Further, a cycle of charging it to 4.3 V with a constant current corresponding to 0.25 C and then discharging it to 3 V with a constant current corresponding to 0.25 C is carried out for 2 cycles to stabilize the secondary battery. In the 5th and subsequent cycles, a cycle of charging it to 4.3 V with a constant current of 0.5 C and further charging it with a constant voltage of 4.3 V until the current value becomes 0.05 C and then discharging it to 3 V with a constant current of 0.5 C, is repeated, whereupon a retention rate of the discharged capacity in the 80th cycle to the discharged capacity in the 1 st cycle is taken as the evaluation result. Here, 1 C represents a current value to discharge the standard capacity of a battery in one hour, and 0.2 C represents a current value of 1/5 thereof.

### [Evaluation Example for cycle characteristics]

With respect to the electrolyte solution secondary battery 1 (Example of the present invention), the cycle characteristics were evaluated, whereby the discharged capacity retention rate after 80 cycles was 91 %.

On the other hand, the cycle characteristics with respect to the electrolyte solution secondary battery 2 (Reference Example) were evaluated, whereby the discharged capacity retention rate after 80 cycles was 90%.

From these results, it can be said that a secondary battery using the electrolyte solution of the present invention has characteristics equal to a secondary batter using the conventional electrolyte solution.

From the foregoing results, it is evident that the electrolyte solution constituted by a specific lithium salt and a specific solvent of the present invention, and a secondary battery constituted by such an electrolyte solution, have excellent performances. That is, even if the content of a highly flammable carbonate is made low, it exhibits sufficient solubility in HFE, and consequently, the system can take a construction of a non-flammable electrolyte solution, and the electrical conductivity of the electrolyte solution shows a practically sufficient value, and further, it becomes an electrolyte solution having low corrosiveness against the electrode (aluminum). Further, a battery using the electrolyte solution of the present invention exhibits cycle characteristics equal to conventional secondary batteries. Thus, according to the present invention, it is possible to provide an electrolyte solution and a secondary battery showing excellent practical usefulness.

### INDUSTRIAL APPLICABILITY

The electrolyte solution of the present invention is useful for lithium batteries such as a lithium-ion secondary battery, a lithium metal secondary battery, a lithium metal primary battery and a lithium air battery, or for storage battery devices such as a lithium-ion capacitor. It is particularly suitable as a non-aqueous electrolyte solution for a lithium-ion secondary battery.

The entire disclosure of Japanese Patent Application No. 2009-078047 filed on March 27, 2009 including specification, claims and summary is incorporated herein by reference in its entirety.

## Claims

1. An electrolyte solution for storage battery devices, which comprises a lithium salt represented by the following formula (1) (wherein at least one fluorine atom may be substituted by a perfluoroalkyl group having at most 4 carbon atoms, and n is an integer of from 1 to 5), a hydrofluoroether and a high-permittivity solvent, as the main components:

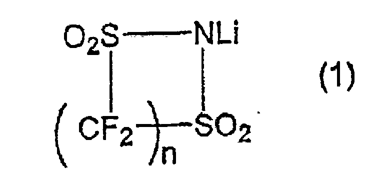

2. The electrolyte solution for storage battery devices according to Claim 1, wherein the lithium salt represented by the formula (1) is a lithium salt wherein n is 2.

3. The electrolyte solution for storage battery devices according to Claim 1 or 2, wherein the high-permittivity solvent is a carbonate type solvent.

4. The electrolyte solution for storage battery devices according to any one of Claims 1 to 3, wherein the hydrofluoroether is CF₃CH₂OCF₂CF₂H, CHF₂CF₂CH₂OCF₂CF₂H, CF₃CH₂OCF₂CHFCF₃, CF₃CF₂CH₂OCF₂CF₂H, CF₃CH_{2O}CH₂CHFCF₃ or CHF₂CF₂CH₂OCH₂CHFCF₃.

5. The electrolyte solution for storage battery devices according to any one of Claims 1 to 4, wherein the volume of the high-permittivity solvent is from 20 to 80% based on the total volume of the hydrofluoroether and the high-permittivity solvent.

6. The electrolyte solution for storage battery devices according to any one of Claims 1 to 5, wherein the amount of the lithium salt is from 0.1 to 3.0 mol to 1 liter of the total volume of the hydrofluoroether and the high-permittivity solvent.

7. The electrolyte solution for storage battery devices according to any one of Claims 1 to 6, wherein the storage battery devices are lithium-ion secondary batteries.

8. A storage battery device using, as its electrolyte solution, the electrolyte solution for storage battery devices as defined in any one of Claims 1 to 6.

9. The storage battery device according to Claim 8, which is a lithium-ion secondary battery.
